# NEUE EUROPÄISCHE PATENTSCHRIFT

(11) **EP 0 592 508 B2**
(45) Veröffentlichungstag und Bekanntmachung des Hinweises auf die Entscheidung über den Einspruch: **04.10.2000**
(45) Hinweis auf die Patenterteilung: 07.06.1995
(21) Anmeldenummer: 92913786.7
(22) Anmeldetag: 06.07.1992
(51) Int. Cl.: B03B 9/06, B03B 5/52

(54) **VERFAHREN UND VORRICHTUNG ZUR VERBESSERUNG DER AUFBEREITUNG VON ABWASSER-FESTSTOFFEN, SAND, MÜLL ODER DERGLEICHEN**
PROCESS AND DEVICE FOR IMPROVING THE TREATMENT OF SEWAGE SOLIDS, SAND, RUBBISH OR THE LIKE
PROCEDE ET DISPOSITIF POUR L'AMELIORATION DU TRAITEMENT DE MATIERES SOLIDES CONTENUES DANS LES EAUX USEES, DE SABLE, DE DECHETS OU SIMILAIRES

(30) Priorität: 05.07.1991 DE 4122366
(43) Veröffentlichungstag der Anmeldung: 20.04.1994
(73) Patentinhaber: FIRMA RUDOLF BISCHOF GMBH, D-85386 Eching (DE)
(72) Erfinder: BISCHOF, Rudolf, D-8057 Eching (DE)
(74) Vertreter: Flügel, Otto, Dipl.-Ing.
(86) Internationale Anmeldenummer: DE9200557
(87) Internationale Veröffentlichungsnummer: WO9301000

(56) Entgegenhaltungen:
- EP-A- 0 228 724
- AT-B- 390 781
- DE-A- 1 960 828
- DE-A- 2 602 306
- DE-A- 2 924 306
- FR-A- 1 236 562
- US-A- 2 071 617
- US-A- 2 283 992
- SOVIET PATENTS ABSTRACTS Section Ch, Week 9106, 27. M rz 1991 DerwentPublications Ltd., London, GB; Class J, AN 91-042139/06

## Beschreibung

Die Erfindung bezieht sich auf die verbesserte Aufbereitung von in Abwassern enthaltenen Feststoffen, Sand, Müll und dergleichen mit Anhaftungen organischer Stoffe belasteten Festkörpern mehr oder weniger großer Partikelkonsistenz, die zu mehr oder weniger großen Anteilen aus einem Feststoff-Flüssigkeits-Gemisch ausgesondert und entsorgt - insbesondere deponiert oder verbrannt - werden, während die verbleibende, entsprechend mehr oder weniger von Feststoffen befreite Flüssigkeit, vorzugsweise an eine biologische Abwasser-Reinigungsanlage (Kläranlage), weitergeleitet wird.

In Abwasserreinigungsanlagen ist die erste Reinigungsstufe als sogenannte mechanische Reinigungsstufe ausgebildet, die in der Regel aus einer Rechen- oder Siebanlage und einem Sandfang besteht.

Es ist bekannt, mit Hilfe von Förderrechen aus einem Gerinne (insbesondere einem solchen größerer Bauart) Feststoffe auszuheben und in Containern oder Rechengutpressen abzuwerfen. Es ist weiterhin bekannt (insbesondere bei schmaleren Gerinnen) eine Siebeinrichtung mit einer zugeordneten Förderschnecke einzusetzen, die dann wiederum das aus dem Gerinne abgeförderte Festgut in einen Container oder eine weitere Nachbehandlungseinrichtung übergibt.

Schließlich ist es bekannt, die anfallenden Feststoffe generell zu zerkleinern und auszupressen, beispielsweise mit Hilfe einer Zerkleinerungspumpe und einer Zentrifugiereinrichtung.

Die im Sandfang abgesetzten Feststoffe werden in der Regel mit Räumern, Pumpen oder ähnlichen Einrichtungen in einen Sandcontainer oder sogenannten Sandklassierer gefördert.

Einer solchen wie auch immer gearteten mechanischen Abwasserreinigungsstufe ist eine biologische Abwasserreinigungsanlage (Klärwerk) nachgeschaltet, die dem Abbau organischer Stoffe dient, d.h. der dort vor sich gehende Vorgang arbeitet mit Organismen, die die organischen Stoffe abbauen.

In den durch die mechanische Abwasserreinigungsstufe herausgeholten Feststoffen (Rechengut, Siebgut oder Sand), aber auch in nicht mit Abwasser herbeigeführten Stoffen wie Müll, befinden sich viele organische Bestandteile. Diese organischen Bestandteile gehen zur Zeit in den meisten Fällen mit dem Rechengut, Siebgut, Sand oder Müll zur Deponie oder in eine Verbrennungsanlage. Dies ist schädlich und sollte vermieden werden.

Es ist bereits bekannt - DE,A,2602306 - ein Feststoff-Flüssigkeits-Gemisch mittels eines Wirbelrades zu verwirbeln, das in einen Abwasserzulauf vor einer Trennzone eingesetzt ist. Damit sollen aus Müll und Abwasser zwei Hauptfraktionen gewonnen werden, nämlich organische Schmutzlast und anorganische Substanzen. Es sollen möglichst alle schwimmfähigen organischen Substanzen in entsprechender Weise von absinkenden anorganischen Stoffen, also Glas, Metallen, Sand, Steinen, Erde und dgl., getrennt werden. Die organischen Substanzen dienen als wertvolles Rohmaterial für die Aktivkohleregeneration. Die Aufwirbelung des Feststoff-Flüssigkeits-Gemisches geht im Zuge der durchlaufenden Strömung vor sich und ist damit hinsichtlich ihrer Wirkung auf den Feststoff von der angelieferten Menge pro Zeiteinheit abhängig. Ein gezieltes und an die jeweiligen Bedürfnisse angepaßtes Waschen durch diese Verwirbelung findet insoweit nicht statt.

Es ist weiterhin bekannt - EP,A,0228724 -, innerhalb eines Behälters ein Feststoff-Flüssigkeits-Gemisch in eine Fraktion zu zerlegen, die kompostiert werden kann und frei von Bestandteilen wie Glas, Steinen, keramischem Material, Metallen und anderen schweren, sinkfähigen Elementen ist. Diese letzteren bilden dann die andere Fraktion, die von organischen Stoffen befreit ist. Dabei wird an der Oberfläche des Feststoff-Flüssigkeits-Gemisches eine rotierend bewegte Eintaucheinrichtung eingesetzt, um das dortige Material unter den Flüssigkeitspegel zu drücken und damit isolierende Überzüge des Materials aufzubrechen. Stromab dieser Taucheinrichtung fließt die mit organischen Stoffen belastete Flüssigkeit über ein Wehr ab. Die schwereren Stoffe sinken ab in den Anfangsbereich der Förderstrecke einer Förderschnecke, in deren Bodenbereich Sprühdüsen münden, mit deren Hilfe die Feststoffe von noch vorhandenem organischem Material befreit werden. Auch dieser Vorgang läuft kontinuierlich ab und läßt eine Anpassung der Wäsche an den jeweiligen Feststoffanfall nicht zu.

Auch ist es bekannt - DE,A,2924306 -, Schwermetalle, insbesondere Gold, in Form kleinster Teilchen auszusortieren, und zwar versetzt mit Wasser in einem Behälter, in welchen unterhalb des Spiegels der Wasserfüllung strahlförmige Wasserströme eingeleitet werden, so daß eine turbulente Wasserströmung erzeugt wird, in welcher das zu behandelnde Gut aufgeschwemmt und mindestens teilweise für eine bestimmte Zeitdauer in der Wirbelströmung bewegt wird. Das sich am Boden des Behälters sammelnde, angereicherte Gut wird dann dem Behälter entnommen. Eine gezielte und einstellbar zu dosierende, insbesondere wiederholte Behandlung dieses Schwermetallgutes ist nicht vorgesehen.

Es ist ebenfalls bekannt -DE,A,1960828 -, Müll oder dgl. mit Flüssigkeit versetzt in einen Behälter zu geben und schwimmfähige Feststoffe mittels Wasserdüsen, die den Müll aufbrechen, von der Gemischoberfläche abzuführen, während sinkfähige Feststoffe in den Aufnahmebereich einer Förderanlage gelangen. Hier ist von einer Waschung der Feststoffe im Sinne der Ablösung organischer Stoffe insoweit nicht die Rede.

Schließlich ist eine Trennung anorganischer Feststoffe von organischen Stoffen aus Abwässern bekannt - DE,B2,2444241 -, bei der ein Abwasser (Fäkalienschlamm) chargenweise unter Überlaufen des Abwassers einschließlich der Schwimm- und Schwebstoffe in einen Absetzraum eingefüllt wird, bis ein unterer Teil des Absetzraumes gefüllt ist, worauf nach Abführen des die abgesetzten anorganischen und organischen Feststoffe überdeckenden Schlammes durch einen absperrbaren Abfluß bei weiterhin geöffnetem Abfluß die abgesetzten Feststoffe mittels diese umrührenden Wasser- und/oder Luftstrahlen durchgespült werden, wobei die organischen Feststoffe von den Kieseln im wesentlichen abgelöst und durch den Abfluß abgeführt werden. Die so gewaschenen Feststoffe rutschen dann chargenweise über einen mit einem Schieber versehenen Durchtritt in einen Förderschacht, aus dem sie mittels einer Kratze, Förderschnecke oder umlaufenden Becherkette abtransportiert werden.

Der Erfindung liegt die Aufgabe zugrunde, ein Vorgehen der in Rede stehenden Art zur Verfügung zu stellen, das es erlaubt, aus Abwassern auszusondernde oder auch anderweitig anfallende Feststoffe besser entsorgbar, insbesondere besser deponierfähig bzw. unschädlicher zu verbrennen, aufzubereiten.

Ausgehend von einem Verfahren zur Verbesserung der Aufbereitung von in Abwassern enthaltenen Feststoffen, Sand, Müll oder dgl., insbesondere für schadstoff- und feuchtigkeitsreduzierte Deponierung und/oder Verbrennung oder dgl. Entsorgung, wobei die Feststoffe in einem Feststoff-Flüssigkeits-Gemisch einer örtlich definierten und gezielten Verwirbelung (Waschung) ausgesetzt und von organischen Stoffen befreit werden, die anschließend mit der Flüssigkeitsphase abgeführt - insbesondere einer biologischen Abwasserreinigungsanlage (Kläranlage) zugeführt - werden, während die derart aufbereiteten Feststoffe zu mehr oder weniger großen Anteilen aus dem Feststoff-Flüssigkeits-Gemisch ausgesondert und der Deponie, Verbrennung oder dgl. feuchtigkeitsarmer Weiterbehandlung zugeführt werden, wird diese Aufgabe erfindungsgemäß dadurch gelöst, daß die örtlich definierte und gezielte Verwirbelung unmittelbar vor Beginn der Aussonderung des Feststoffes aus der Verwirbelungszone heraus erfolgt und daß der ausgesonderte Feststoff der Verwirbelungszone durch Umkehrung der Aussonderungsrichtung wieder zugeführt wird.

Man unterzieht also beispielsweise aus Abwassern zu entfernende Feststoffe vorher oder nachher einem wiederholten Waschvorgang, durch welchen die organischen Stoffe - z.T. unter einer schonenden Zerkleinerung (z.B. Toilettenpapier) - aus dem übrigen Festgut ausgewaschen werden. Dadurch wird erreicht, daß organische Stoffe nicht mit dem Feststoff zur Deponierung oder Verbrennung gelangen, sondern in das Klärwerk überführt werden. Dies gilt insbesondere auch für Sand und weitergreifend für Müll und dergleichen, also Feststoffe, die nicht notwendigerweise als Bestandteil von Abwasser anfallen. Soweit Feststoffe nicht in einem Feststoff-Flüssigkeits-Gemisch anfallen, kann man sie zur erfindungsgemäßen Behandlung mit einer Waschflüssigkeit versetzen, so daß ein Gemisch vorliegt, das die erfindungsgemäße Befreiung der Feststoffe von anhaftenden organischen Stoffen bewirkt.

Die ausgewaschenen Reststoffe werden zurückgehalten und wie bisher entsorgt. Bei diesen Reststoffen handelt es sich um das Material, das in einer Abwasserreinigungsanlage unerwünscht ist (Faserstoffe, Plastikteile, Sand und sonstige anorganische Teile).

Es ergibt sich auf diese Weise auch eine Reduzierung der Müllmenge (bis zu 80 %) sowie ein höherer Trocknungsgrad, weil die organischen Stoffe als Feuchtigkeitsträger entfallen. Dieser Trocknungsgrad kann ganz erheblich sein, nämlich beispielsweise von bisher 20 % auf über 50 % Trockensubstanz erreichen.

Eine Vorrichtung zur Durchführung des vorgeschilderten Vorgehens enthält mit als Hauptbestandteil ein Verwirbelungsgerät, vorzugsweise in Form eines drehenden Rades, das radial gerichtete Stege oder bogenförmige Flügel und dergleichen aufweisen kann, Formgebungen also, die weitgehend dem Medium angepaßt werden können. Dieses Verwirbelungsgerät bzw. Wirbelrad wird vor dem Gerät angeordnet, das die Feststoffe aus einem Gerinne oder einem Bottich aushebt (Schneckenförderer mit Sieb).

Zum einen wird also dafür gesorgt, daß eine Verwirbelung beispielsweise in einem Gerinne oder Behälter und damit eine Auswaschung organischer Stoffe vor einem Sieb erfolgt, so daß das Abwasser mit den organischen Stoffen aber ohne die auszutragenden gröberen Feststoffe durch das Sieb gelangt und der Kläranlage zugeleitet wird. Es ist aber auch möglich, zunächst die Feststoffe in ihrer (gröberen) Gesamtheit aus einem zu klärenden Abwasser herauszutransportieren und dann die erfindungsgemäß vorgesehene Auswaschung der organischen Stoffe vorzunehmen. In einem solchen Falle wird man eine Verdichtung des Feststoffes dann bevorzugt vornehmen, wenn die organischan Stoffe bereits ausgewaschen sind. Mit Rücksicht auf bereits bestehende Anlagen läßt sich aber auch das bereits aus Abwasser ausgehobene verdichtete Gut der erfindungsgemäßen Waschung unterziehen und muß dann ggfs. erneut verdichtet werden. Dazu ist zu bemerken, daß für das Auswaschen der organischen Stoffe die Zufuhr von Waschflüssigkeit erforderlich sein kann, sei es gewonnen aus dem vorgeklärten Abwasser oder durch Zugabe von Brauchwasser.

Die durch die Zugabe von Waschflüssigkeit (Brauchwasser) erreichte Verdünnung und damit verbesserter Auswaschung (Trennung organischer Stoffe von den Feststoffen) kann dadurch begünstigt werden, daß man Druckluft oder ein Gas-Flüssigkeits-Gemisch über ein Düsensystem im Bereich des Waschgerätes zugibt. Dabei kommt auch der Zusatz von die Ablösung dieser organischen Stoffe begünstigenden Substanzen in Betracht.

Wie bereits erwähnt, muß es sich vorliegend nicht um ein einem Klarwerk zugeleitetes Abwasser handeln, sondern es kann in dieser Weise auch Müll oder Sand behandelt werden. Dazu kann man mehr oder weniger große Behälter zur Verfügung stellen, in die Sand oder Müll oder dergleichen eingegeben und in der vorgeschilderten Weise ausgewaschen wird. Auch damit wird der hier bedeutsame Effekt erzielt, die Trockensubstanz des gewonnenen, zu deponierenden oder zu verbrennenden, Materials zu verbessern.

Vorrichtungsmäßig ergeben sich unterschiedliche Möglichkeiten, die Auswaschung vorzunehmen. In jedem Falle ist eine gewisse Flüssigkeitsmenge erforderlich, um die Feststoffe von den organischen Stoffen zu trennen. Ordnet man das Waschgerät nach Entnahme der Feststoffe aus einem Gerinne an oder wäscht man Müll oder Sand, dann wird ein Behälter vorgesehen, in welchen diese Feststoffe eingegeben werden, und zwar zugleich aufgefüllt mit Waschwasser. Für den Auswaschvorgang selbst braucht man ein gewisses Volumen dieser Mischung. Wenn das austragende Gerät ein Sieb aufweist, durch welches die Flüssigkeit mit den ausgewaschenen organischen Stoffen abfließt, ergibt sich eine Aufstauung durch sich vor dem Sieb ansammelnden Feststoff. Grundsätzlich ist ein kontinuierlicher Betrieb möglich, doch ist im Rahmen der Auswaschung in einem Behälter und im übrigen auch aufgrund des unterschiedlichen Anfalles entsprechend zu behandelnder Substanzen bzw. Gemischen ein intermetierender Betrieb, als ein chargenweises Auswaschen bevorzugt möglich.

Der Betrieb einer Förderschnecke beispielsweise wird abhängig vom Anfall der Feststoffe gemacht, d.h. eine solche Förderschnecke läuft nicht durchgehend. In den Betriebspausen würde man die Waschung vornehmen, und zwar mit dem Erfolg, daß die ausgewaschenen Feststoffe das Sieb zusetzen. Auf diese Weise erhält man dann die gewünschte Teichhöhe für das Auswaschen. Danach wird die Förderschnecke in Gang gesetzt, um den derart angesammelten Feststoff abzutransportieren. Man variiert einen solchen intermetierenden Betrieb dahingehend, daß man die Schnecke gegen die Förderrichtung einige Male umlaufen läßt, um den Feststoff in Gegenförderrichtung noch einmal der Waschung zuzuführen und das Sieb von angeschwemmten Feststoffen freizumachen. Beispielsweise kommt in Betracht, bei entsprechend aufgebauter Teichhöhe die Förderschnecke in einem bestimmten zeitlichen Rhythmus mehrmals für etliche Sekunden zurücklaufen zu lassen. Ist dann genügend ausgewaschener Feststoff vorhanden, wird für einige Minuten die Schnecke in Förderrichtung betrieben, wodurch der gereinigte Feststoff abgeführt wird, während die Flüssigkeit mit den ausgewaschenen organischen Stoffen durch das Sieb der Förderschneckeneinrichtung abgeführt wird (Kläranlage).

Es ist grundsätzlich bekannt, die Schneckenwendel an ihrer radial äußeren Kante mit einer Bürsteneinrichtung zu versehen, um den die Schnecke umgebenden Siebmantel freizuhalten. Durch die hier vorgesehene Betriebsweise in beiden Drehrichtungen wird die Schneckenwendel bevorzugt an beiden Stirnseiten, also stirnseitig in Förderrichtung und stirnseitig auch in Gegenförderrichtung, mit Bürsten versehen. Das führt dazu, daß die in jeweiliger Förderrichtung nach vorn weisend angebrachte Bürste auf Druck beansprucht den Großteil der Siebreinigungsarbeit und damit der entsprechenden mechanischen Beaufschlagung aufnimmt, während die nachlaufende Bürste, die auf Zug beansprucht ist, geringere Belastungen zu ertragen hat. Das wirkt sich günstig auf die Befestigung aus und führt insgesamt dazu, daß der Bürstenverschleiß sich verringert. Um einem solchen Bürstenverschleiß dennoch Rechnung zu tragen, ist eine Bürstenhalterung vorgesehen, die eine radiale Verstellung des Borstenbettes der Bürste ermöglicht. Das Borstenbett ist in einer mit der Wendel verschraubten Halterung derart befestigt, daß bei Lösen der Verschraubung eine Versetzung des Borstenbettes in dessen Längsrichtung erfolgen kann. Je weiter also radial nach außen das Borstenbett gerät, um so kürzer wird die Bürstenerstreckung in axialer Richtung, wobei es sich nur um Größenordnung von Zentimetern handelt.

Grundsätzlich ist es möglich, den Antriebsmotor für das Wirbelrad außerhalb des Gemisches anzuordnen. Vorzugsweise wird man die dann durch das Gemisch geführte Welle für den Antrieb des Wirbelrades innerhalb eines Rohres laufenlassen, um zu verhindern, daß sich um die Welle Faserstoffe ansammeln. In besonders bevorzugter Weise wird jedoch das Wirbelrad unmittelbar an die Abtriebswelle des Antriebsmotoraggregates - Elektromotor selbst oder Abtriebswelle eines nachgeschalteten Getriebes - angeschlossen, und zwar nahe beim Ausgang dieser Abtriebswelle aus dem Gehäuse des Antriebsmotoraggregates. Auf diese Weise wird verhindert, daß sich insbesondere faserförmige Stoffe zu dickeren Ballen um die drehende Welle zwischen Antriebsmotoraggregat und Wirbelrad aufbauen.

Soweit das Wirbelrad an seiner Peripherie zu einer Wanne bzw. einem ortsfesten Umgebungsbereich hin einen Spalt aufweist, besteht die Gefahr, daß sich langfasrige Feststoffe, wie Strümpfe und dergleichen, oder auch Sand ansammeln bzw. festsetzen, die damit die Laufeigenschaft des Wirbelrades zumindest beeinträchtigen, wenn nicht verhindern. Um dem zu begegnen wird von der Bodenseite her, also außerhalb des Waschtrograumes, eine Leitung vorgesehen, die im Bereich dieses kreisringförmigen Spaltes mündet. Es können sich auch mehrere Leitungen über diesen Umfang hinweg verteilt befinden. Durch die Leitung wird Wasser oder aber auch Luft eingegeben. Durch die Drehung des Wirbelrades wird auch bei Aufgabe von Wasser und/oder Luft nur an einer Stelle ein Freiräumen dieses Ringspaltes in Umfangsrichtung insgesamt erreicht. Bei Verwendung von Luft, die durch das schnelldrehende Wirbelrad stark verwirbelt wird, ergeben sich kleine Luftblasen, an denen sich feine Feststoffe anhängen und mit diesen zur Oberfläche treiben, wo sie eine Schwimmdecke bilden. Diese Schwimmdecke kann mit einer besonderen Vorrichtung geräumt werden. Diese Vorstellung der Zuleitung von Gas, Gas-Flüssigkeits-Gemisch bzw. Luft begegnet sich mit derjenigen, zur Erhöhung einer Flotation Luft in den Verwirbelungsbereich einzuleiten.

Diese oder weitere Ausführungsformen der Erfindung ergeben sich aus den Unteransprüchen, insbesondere im Zusammenhang mit den in der Zeichnung wiedergegebenen Ausführungsbeispielen, auf die besonders Bezug genommen wird und deren anschließende Beschreibung die Erfindung naher erläutert. Es zeigen
- Figuren 1 und 2: Seitenansicht und Draufsicht auf eine schematische Anlage für eine Wirbelwäsche in einem Behälter;
- Figuren 3 und 4: schematische Draufsicht und Seitenansicht einer winkelförmigen Anordnung eines Behälters für Rechengutwäsche;
- Figur 5: eine schematische Seitenansicht einer Anlage für Wirbelwäsche im Gerinne;
- Figur 6: eine schematische Seitenansicht einer Sandwascheinrichtung in einem Sandklassierer.

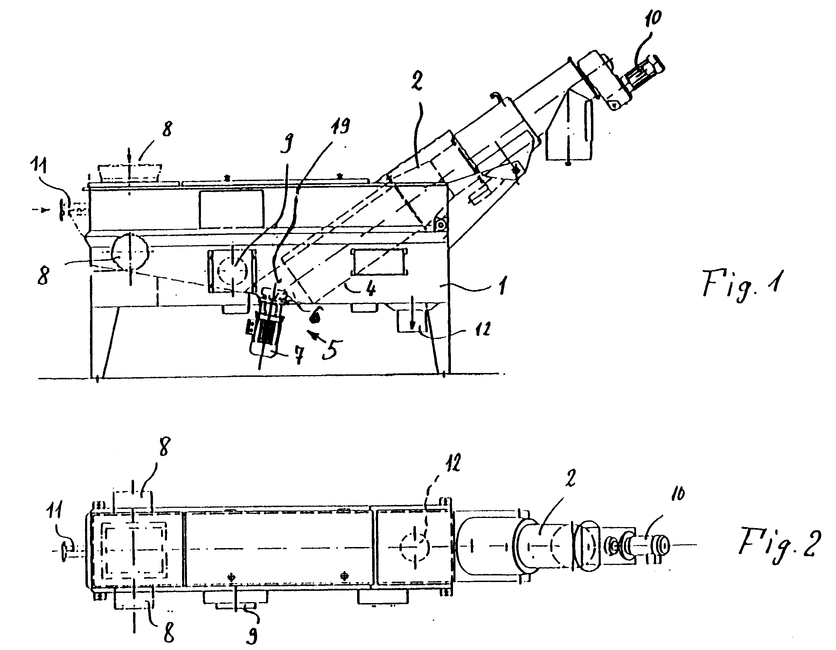

Der in den Figuren 1 und 2 in Seitenansicht und Draufsicht schematisch wiedergegebene Prototyp beinhaltet in erster Linie die Vorstellung, aus einem Gerinne mittels einer Förderschnecke, deren Mantel im Gerinnebereich siebförmig ausgebildet ist, ausgehobenen Feststoff in einen Behälter 1 zu überführen, um ihn dort einer Nachbehandlung zu unterziehen, die zum Ziele hat, die Feststoffpartikel möglichst weitgehend von anhaftenden organischen Stoffen zu befreien. Diese Feststoffe können im Falle gröberer Struktur zuvor oder aber auch innerhalb des nachfolgend beschriebenen Behälters einer gewissen Zerkleinerung unterworfen werden. Andererseits können in diesen Behälter 1 auch Feststoffe eingegeben werden, die ähnlich den vorerwähnten Feststoffen aus welchen Gründen auch immer oberflächenhaftende organische Stoffe aufweisen, hier kann es sich - auch außerhalb des im Zuge des Sandfangs bei Abwässern anfallenden Sandes - um anderweitig zu behandelnden Sand handeln, insbesondere aber auch um Müll, der der Deponierung oder der Verbrennung zugeführt werden soll.

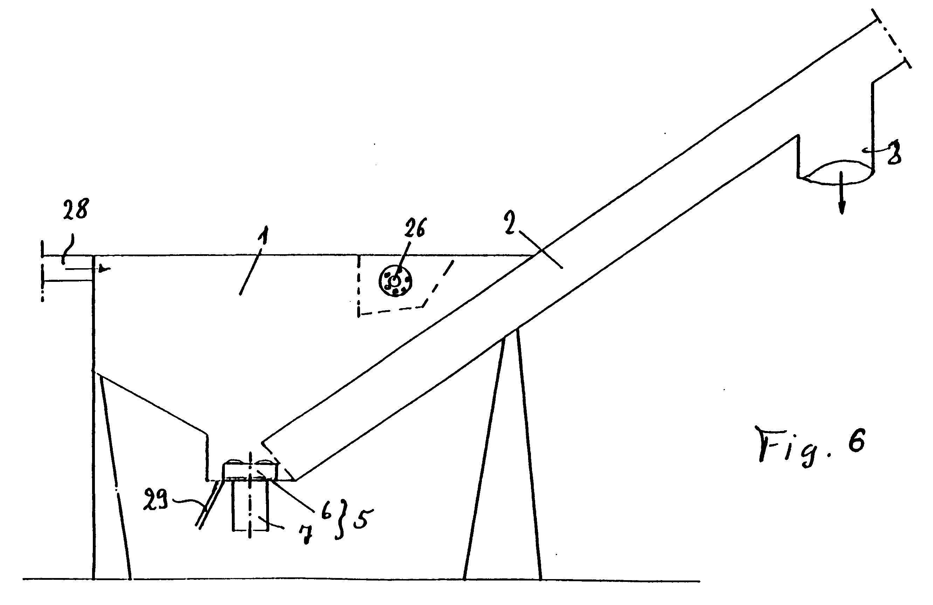

In grundsätzlich bekannter Weise ist in den Behälter 1 eine "Siebschnecke" 2 eingeführt, die in ihrem in den Feststoff-Flüssigkeits-Gemischbereich eintauchenden Teil mit einem siebförmig durchlöcherten oder sonstwie flüssigkeitsdurchlässigen, die radialen Außenbereiche der Schneckenwendel umgebenden Mantel 4 versehen ist. Diese grundsätzlich bekannte Vorstellung geht davon aus, daß das in den Bereich der Schnecke innerhalb des siebförmigen Mantels gelangende Feststoff-Flüssigkeits-Gemisch durch die Förderwirkung der Schnecke insoweit vom Feststoff befreit wird, der in Förderrichtung der Schnecke schräg nach oben gefördert, ggfs. in einem Preßabschnitt von noch anhaftender Flüssigkeit in üblichem Umfange befreit durch einen Feststoffauswurf 3 in einen Container (21 in Fig. 6) abgeworfen wird. Die Preßzone kann auf verschiedene, bekannte Art und Weise gebildet sein, sei es durch Verringerung des Wendelabstandes der Förderschnecke in diesem Bereich, sei es durch Durchmesserveränderung oder allein dadurch, daß der Feststoff durch die Schnecke in den Bereich des Feststoffauswurfes 3 allein unter Druckbeaufschlagung gefördert wird.

Die hier interessierende besondere Ausgestaltung besteht darin, daß im Bereich 19 unmittelbar vor Beginn der Förderstrecke durch die Siebschnecke 2, in dem also noch ein Feststoff-Flüssigkeits-Gemisch vorliegt, ein Verwirbelungsgerät 5 angeordnet ist, mit dessen Hilfe die Feststoffkörper innerhalb dieses Gemisches entsprechend turbulent beaufschlagt werden, um die an diesen Körpern anhaftenden organischen Stoffe abzulösen und mit der Flüssigkeitskomponente durch den Siebmantel 4 zu einem Waschwasserablauf 12 zu führen.

Das vorgeschilderte Prinzip gilt im Rahmen der vorliegenden Betrachtungen ganz allgemein. Konkret auf die Ausführung nach den Figuren 1 und 2 ausgerichtet wird ein Feststoff entweder fallend von oben oder seitlich durch mechanisches Einschwemmen unterstützt bei 8 eingeführt, durch Waschwasserzufuhr über den Anschluß 11 zu einem verwirbelfähigen Feststoff-Flüssigkeits-Gemisch vermengt und nach Behandlung durch das Verwirbelungsgerät 5 mittels der Siebschnecke 2 in insoweit von organischen Stoffen befreiten Feststoff einerseits und entsprechend mit organischen Stoffen belastetem Abwasser andererseits getrennt, das durch den Waschwasserablauf 12 abgeführt wird, insbesondere in eine biologisch arbeitende Weiterbehandlungseinrichtung wie beispielsweise einem Klärwerk.

Das Verwirbelungsgerät 5 besteht hinsichtlich der Verwirbelungswirkung aus einem Wirbelrad 6, das von einem Antriebsaggregat 7 in verhältnismäßig hohe Drehzahlen versetzt wird. Wie Figur 1 erkennen läßt, ragt nur das Wirbelrad 6 in den Bereich 19 des Gemisches unmittelbar vor Beginn der Förderstrecke der Siebschnecke 2, während das Antriebsmotoraggregat 7 sich unterhalb einer entsprechenden Bodenwandung befindet, selbstverständlich hinsichtlich der Abtriebswelle zu dem Wirbelrad hin flüssigkeitsdicht ausgebildet. Das Motorantriebsaggregat 7, an dessen Abtriebswelle das Wirbelrad 6 befestigt ist, kann ausschließlich aus einem Elektromotor bestehen, es kann sich aber auch in bevorzugter Form um einen Antriebsmotor mit nachgeschaltetem Übersetzungsgetriebe handeln, um an dessen Ausgang, nämlich der Abtriebswelle, die für die jeweilige Behandlung des Feststoff-Flüssigkeits-Gemisches mit dem Ziel der Ablösung organischer Stoffe, die geeignete Drehzahl des Wirbelrades zur Verfügung zu stellen. Das Wirbelrad kann flügelförmige Rippen aufweisen, die in bekannter Weise ganz einfach radial verlaufend angeordnet sind, es kann sich aber auch um hinsichtlich des Radius davon abweichend gebogen verlaufende Flügelwandungen handeln und dergleichen mehr.

Anlagen der hier in Rede stehenden Art sind mit Ausnahme der Verwirbelungseinrichtung grundsätzlich bekannt, sie arbeiten vielfach chargenweise, d.h. hinsichtlich ihrer Aushubeinrichtungen wie Rechen oder Schnecke in Abhängigkeit von dem angesammelten Feststoff bzw. des Flüssigkeitsstaus, der sich in Abhängigkeit vom Feststoffanfall ergibt. Bei Anwendung des Gerätes im Zusammenhang unmittelbar mit Abwassergerinnen wird die Einschaltung von Rechen oder Förderschnecke unmittelbar flüssigkeitspegelabhängig gesteuert. Man kann aber auch - wie insbesondere im Zusammehang mit einer Trennung des Feststoff-Flüssigkeits-Gemisches in einem Behälter üblich, chargenweise arbeiten.

Um die den Feststoff aus dem Feststoff-Flüssigkeits-Gemisch aushebenden und den Feststoff ausfilternden Geräte von Verstopfungen zu bewahren und solche Verstopfungen allenfalls im Sinne einer Aufstauung für die Wirbelbehandlung ausnutzend vorzusehen, sind diese Geräte - Förderschnecke mit Siebmantel, wie grundsätzlich bekannt, derart über den Schneckenantriebsmotor 10 antriebstechnisch ausgebildet und gesteuert, daß sie einen Rücklauf in dem der Förderrichtung entgegengesetzten Sinne erlauben. Damit wird erreicht, daß sich beispielsweise im Siebmantel einer Förderschnecke festsetzender und damit das Sieb verstopfender Feststoff durch die in Gegenförderrichtung angetriebene Schnecke aus dieser verstopfenden Lage heraus in den Einflußbereich 19 des Verwirbelungsgerätes 5 bzw. des Wirbelrades 6 zurückgefordert werden. Damit hat man es in der Hand, das zur Freisetzung organischer Stoffe, die an dem Feststoff haften, vorgesehene Verwirbeln zu wiederholen und damit zu intensivieren und zugleich zu verhindern, daß der sich vor der Abförderungsanlage für den Feststoff bildende Stau zu groß wird.

In diesem Zusammenhang kann man als Beispiel folgende Betriebsweise nennen: Die Förderschnecke wird nur bei entsprechendem Feststoffanfall und damit Stau überhaupt eingeschaltet. Danach wird zwischen zwei Betriebsphasen unterschieden, nämlich zum einen ein mehrmaliges, von Stillstandspausen unterbrochenes Rücklaufen des Fördergerätes gegen die Förderrichtung und somit wieder Zuführung der Feststoffe in den Verwirbelungsbereich und damit Freilegen der Sieböffnungen, und zum anderen eine gezielte Abförderphase, in der die Fördereinrichtung den angesammelten Feststoff aus dem Feststoff-Flüssigkeits-Gemisch heraushebt und in einen Container oder dergleichen Weiterbeförderungsgerät überführt, und zwar in einem durch das Waschen mittels des Verwirbelungsgerätes von organischen Stoffen weitgehend freien Zustand.

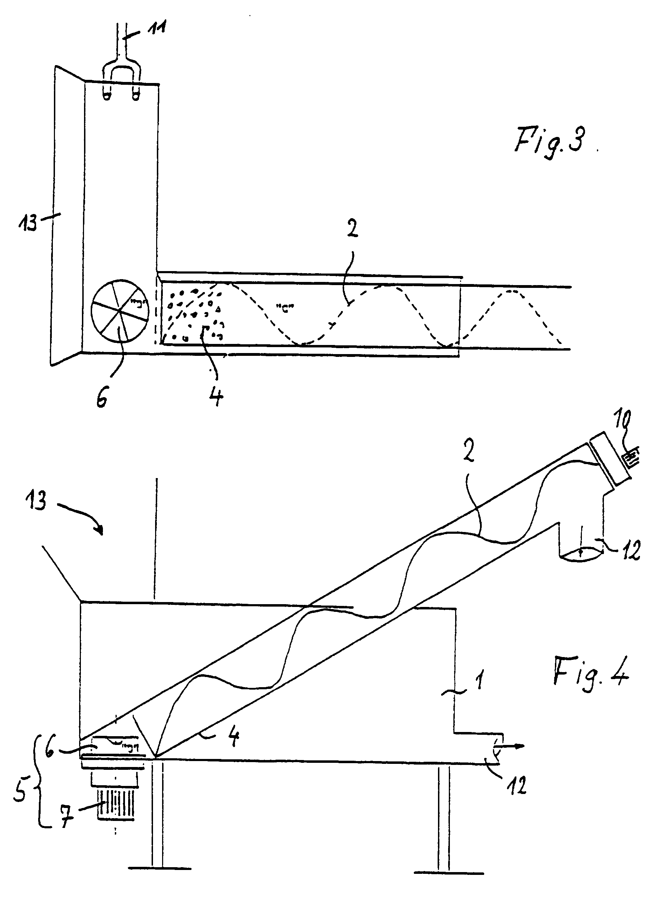

In den Figuren 3 und 4 ist eine Variante eines Behälters 1 gezeigt, bei welchem ein nicht dargestellter Siebrechen den aus einem Abwasser ausgesonderten Feststoff über eine Abwurfrutsche 13 anliefert. Über einen Zulauf 11 wird Waschwasser zugeführt, und das derart gewonnene Feststoff-Flüssigkeits-Gemisch wird seitlich in den Bereich 19 oberhalb des Wirbelrades 6 eines Verwirbelungsgerätes 5 überführt, das sich insoweit unmittelbar vor dem Beginn der Förderstrecke einer Förderschnecke 2 befindet, die den aus dem Behälter 1 entnommenen Feststoff bei 3 auswirft.

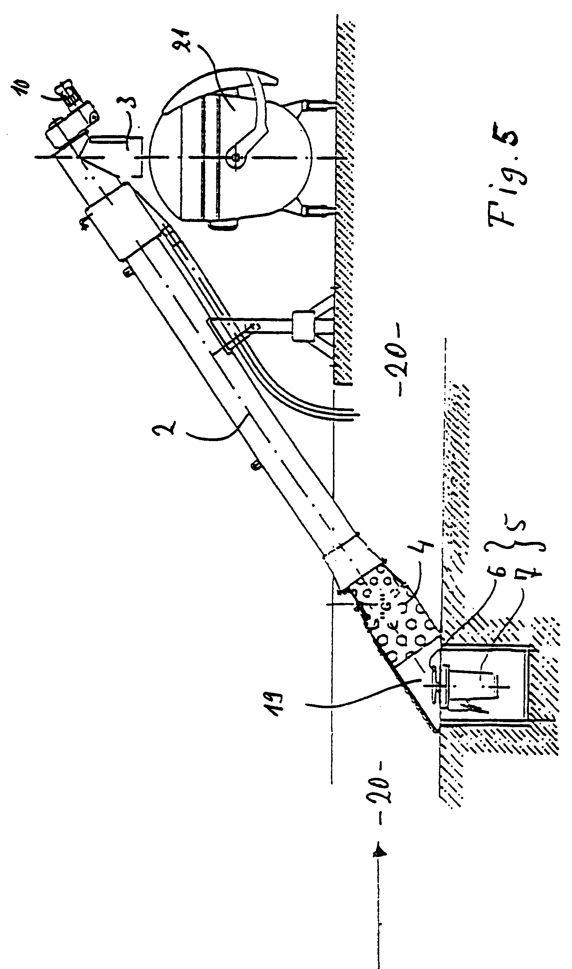

Figur 5 zeigt den Einsatz eines Verwirbelungsgerätes im Zusammenhang mit einem in ein Gerinne 20 hineinragendes Abfördergerät mit einer Förderschnecke 2 und einem im Gerinnebereich siebförmig ausgebildeten Schneckenmantel 4. Diese sehr einfache Ausbildung ist besonders interessant. Der Bereich 19 unmittelbar vor Beginn der Förderschnecke 2 ist auch bei bekannten Anlagen dieser Art gegeben. In diesen Bereich hinein ragt das Wirbelrad 6 des Verwirbelungsgerätes 5, und im vorliegenden Beispiel derart, daß das Motorantriebsaggregat 7 des Verwirbelungsgerätes 5 in einer Kammer unterhalb des Bodenes des Gerinnes 20 untergebracht ist, also in diesem Falle als sogenanntes Tauchgerät wasserdicht ausgebildet. Bei Anordnungen des Antriebsmotoraggragates 7 oberhalb des Gerinnes mit einer entsprechend langen zum Wirbelrad 6 hin reichenden Abtriebswelle besteht die Gefahr einer Ansammlung von faserförmigen Feststoffen, die Verstopfungserscheinungen hervorruft, man müßte deshalb eine solche Abtriebswelle zwischen oberhalb des Gerinnes 20 angeordnetem Antriebsmotoraggregat und insoweit in Bodennähe angeordneten Wirbelrad 6 kapseln. Wie diese Figur erkennen läßt, können die aus dem Gerinne ausgehobenen gewaschenen Feststoffe mittels der Förderschnecke 2 in einen Container 21 überführt werden, was hier beispielsweise für auch die anderen Ausführungsformen steht.

Figur 6 zeigt die Anwendung des Verwirbelungsgerätes 5 bei einem Sandklassierer gängiger Bauart. Der Sandklassierer ist im behälterseitigen Endbereich eines oder einer als "Sandklassierer" tätigen Fördereinrichtung angeordnet, die bei 3 einen Auswurf für gereinigten Sand aufweist, bei 28 einen Zulauf für verschmutztes Sand-Wasser-Gemisch besitzt, bei 26 einen Trübwasserüberlauf aufweist und bei 29 mit einer Zuführleitung für Waschwasser und/oder Luft bzw. eines entsprechenden Gemisches versehen ist. Diese Zuleitung 29 betrifft den Bereich 19 im Umfeld des Wirbelrades 6, sie hat jedoch auch Bedeutung für die Sauberhaltung des Überganges zwischen dem Wirbelrad 6 und dem Antriebsmotoraggregat 7 bzw. einer dazwischen angeordneten Haltewandung, dergestalt, daß sich dort ansammelnde Feststoffe durch den Waschflüssigkeits- bzw. Luftstrom entfernt werden, um die Bewegung des Wirbelrades nicht zu behindern. Diese Waschflüssigkeit- oder Luftzufuhr ist im Sinne einer besseren Verwirbelung bzw. Flotation auch bei den vorgeschilderten Ausführungsformen grundsätzlich von Beachtung und dient hier in weiterer Weise der mechanischen Freihaltung der Wirbelradbeweglichkeit.

## Patentansprüche

1. Verfahren zur Verbesserung der Aufbereitung von in Abwassern enthaltenen Feststoffen, Sand, Müll oder dgl., insbesondere für schadstoff- und feuchtigkeitsreduzierte Deponierung und/oder Verbrennung oder dgl. Entsorgung, wobei die Feststoffe in einem Feststoff-Flüssigkeits-Gemisch einer örtlich definierten und gezielten Verwirbelung ausgesetzt und von organischen Stoffen befreit werden, die anschließend mit der Flüssigkeitsphase abgeführt - insbesondere einer biologischen Abwasserreinigungsanlage zugeführt - werden, während die derart aufbereiteten Feststoffe zu mehr oder weniger großen Anteilen aus dem Feststoff-Flüssigkeits-Gemisch ausgesondert und der Deponie, Verbrennung oder dgl. feuchtigkeitsarmer Weiterbehandlung zugeführt werden,
**dadurch gekennzeichnet**,
daß die örtlich definierte und gezielte Verwirbelung unmittelbar vor Beginn der Aussonderung des Feststoffes aus der Verwirbelungszone heraus erfolgt und daß der ausgesonderte Feststoff der Verwirbelungszone durch Umkehrung der Aussonderungsrichtung wieder zugeführt wird.

2. Verfahren nach Anspruch 1,
**dadurch gekennzeichnet**,
daß die Zuführung des zu waschenden Feststoffes zu der Verwirbelungszone chargenweise (intermittierend) vorgenommen wird.

3. Verfahren nach Anspruch 1 oder 2,
**dadurch gekennzeichnet**,
daß die Verwirbelung und damit Waschung der Feststoffe vor deren Aussondern aus einem entsprechend verschmutzten Abwasser innerhalb eines Gerinnes vorgenommen wird.

4. Verfahren nach Anspruch 1 oder 2,
**dadurch gekennzeichnet**,
daß die Verwirbelung und damit Waschung der Feststoffe innerhalb eines Behälters vorgenommen wird.

5. Verfahren nach Anspruch 4,
**dadurch gekennzeichnet**,
daß dem Feststoff nach dessen Aussondern aus einem entsprechend verschmutzten Abwasser oder einem Feststoff, der außerhalb eines Abwassers anfällt, wie bspw. Müll, vor der Verwirbelung und damit Waschung Waschflüssigkeit - vorgeklärtes Abwasser oder Brauchwasser - beigemischt wird.

6. Verfahren nach einem der Ansprüche 1 bis 5,
**dadurch gekennzeichnet**,
daß der Verwirbelungszone zusätzlich ein Gas oder ein Gas-Flüssigkeits-Gemischzugeführt wird.

7. Verfahren nach einem der Ansprüche 1 bis 6,
**dadurch gekennzeichnet**,
daß das Aussondern der Feststoffe durch deren Herausheben aus dem Feststoff-Flüssigkeits-Gemisch vorgenommen wird.

8. Verfahren nach Anspruch 7,
**dadurch gekennzeichnet**,
daß eine für das Herausheben des Feststoffes vorgesehene Fördereinrichtung nur bei entsprechendem Feststoffanfall und damit Stau eingeschaltet wird, wonach zwischen zwei Betriebsphasen unterschieden wird, nämlich zum einen ein mehrmaliges, von Stillstandspausen unterbrochenes Rücklaufen der Fördereinrichtung gegen die Förderrichtung und somit Wiederzuführung der Feststoffe in den Verwirbelungsbereich und damit Freilegen der Sieböffnungen und zum anderen eine gezielte Abförderphase, in der die Fördereanrichtung den angesammelten Feststoff aus dem Feststoff-Flüssigkeits-Gemisch heraushebt.

9. Vorrichtung für die Durchführung des Verfahrens nach einem der Ansprüche 1 bis 8 zur Verbesserung der Aufbereitung in Abwassern enthaltenen Feststoffen, Sand, Müll oder dgl., insbesondere für schadstoff- und feuchtigkeitsreduzierte Deponierung und/oder Verbrennung oder dgl. Entsorgung, mit einem den Feststoff in Form eines Feststoff-Flüssigkeits-Gemisches aufnehmenden Gerinne oder Behälter, in das bzw. den ein Verwirbelungsgerät eingesetzt ist und aus dem der durch Waschung des in dem Feststoff-Flüssigkeits-Gemisch gewonnene, von organischen Stoffen entreicherte Feststoff einerseits und die Feuchtigkeit mit den organischen Stoffen andererseits ausgesondert abgeführt wird,
**dadurch gekennzeichnet**,
daß das Verwirbelungsgerät in einen Bereich eines Feststoff-Flüssigkeits-Gemisches unmittelbar vor dem Beginn der Förderstrecke einer mit einem Antrieb versehenen einen Siebmantel aufweisenden Förderschnecke zur Aussonderung des Feststoffes eingesetzt ist, welcher Antrieb hinsichtlich der Drehrichtung in bestimmten Intervallen für das Umlaufen der Schnecke einige Male gegen die Förderrichtung umkehrbar gesteuert ist.

10. Vorrichtung nach Anspruch 9,
**dadurch gekennzeichnet**,
daß das Verwirbelungsgerät (5) ein motorisch (7) schnellaufend angetriebenes Wirbelrad (6) aufweist, das unmittelbar vor Beginn der Förderstrecke angeordnet ist.

11. Vorrichtung nach Anspruch 10,
**dadurch gekennzeichnet**,
daß das Wirbelrad (6) unmittelbar vor dem Beginn der Förderstrecke einer Förderschnecke (2) für das Ausheben des Feststoffes aus einem Gerinne (20) vorgesehen ist.

12. Vorrichtung nach Anspruch 10,
**dadurch gekennzeichnet**,
daß das Wirbelrad (6) in einem Behälter (1; 16) angeordnet ist, in dem das Feststoff-Flüssigkeits-Gemisch enthalten ist, entweder durch Eingabe von aus einem Abwasser durch eine Rechenanlage oder einer Förderschnecke (2) ausgesondertem Feststoff oder einer Sand- oder Müllfüllung versetzt mit Waschwasser.

13. Vorrichtung nach Anspruch 9,
**dadurch gekennzeichnet**,
daß der Behälter (1) eine nach oben geöffnete und/oder seitliche Eingabeöffnung (8) für den Feststoff - ggfs. mit Flüssigkeitsanteil - und eine Eingabeöffnung (11) für Waschflüssigkeit, eine Siebschnecke (2, 4), für den gewaschenen Feststoff, eine Ablauföffnung (12) für das mit den abgewaschenen organischen Stoffen belastete Waschwasser und ein Verwirbelungsgerät (5) aufweist, das in einem Bereich (19) unmittelbar vor Beginn der Förderstrecke angeordnet ist.

14. Vorrichtung nach Anspruch 12 oder 13,
**dadurch gekennzeichnet**,
daß der Benälter (1) winkelförmig ausgebildet ist und gegenüber einer Abwurfrutsche (13) für das aufgegebene Gut, insbesondere mittels eines Rechens angelieferten Feststoff, eine im seitlichen Randbereich angeordnete Siebschneckeneinrichtung (2, 4) aufweist, in deren Bereich unmittelbar vor Beginn der Förderstrecke das Wirbelrad (6) angeordnet ist.

15. Vorrichtung nach einem der Ansprüche 9 bis 14,
**dadurch gekennzeichnet**,
daß das Verwirbelungsgerät (5) als hinsichtlich seines Gehäuses für das Motorantriebsaggregat (7) Tauchgerät insoweit flüssigkeitsdicht ausgebildet ist.

## Claims

1. Process for improving the processing of solids, sand, rubbish or the like, contained in sewage, particularly for toxin- and moisture-reduced dumping and/or incineration or other disposal, wherein the solids in a solid liquid mixture are subjected to a locally defined and controlled turbulence and are freed from organic matter, which is subsequently taken away with the liquid phase - more particularly taken to a biological sewage purification plant - whilst the solids thus processed are separated out, in larger or smaller amounts, from the solid/liquid mixture and taken for dumping, incineration or other low-moisture further treatment, **characterised** in that the locally defined and controlled turbulence is created immediately before the start of the separation out from the turbulence zone and in that the solids separated out are again delivered to the turbulence zone by means of reversing the separation direction.

2. Process according to claim 1, **characterised** in that the solids which are to be washed are delivered to the turbulence zone in batches (intermittently).

3. Process according to claim 1 or 2, **characterised** in that the solids are subjected to turbulence and hence washed before they are separated from the correspondingly contaminated waste water inside a channel.

4. Process according to claim 1 or 2, **characterised** in that the solids are subjected to turbulence and hence washed inside a container.

5. Process according to claim 4, **characterised** in that washing liquid - pre-clarified waste water or consumption water - is mixed with the solids after they have been separated out from correspondingly contaminated waste water, or with solids such as rubbish occurring separately from sewage, before the exposure to turbulence and hence washing.

6. Process according to one of claims 1 to 5, **characterised** in that additionally a gas or a gas/liquid mixture is fed into the turbulence zone.

7. Process according to one of claims 1 to 6, **characterised** in that the separation of the solids is carried out by lifting them out from the solid/liquid mixture.

8. Process according to claim 7, **characterised** in that a conveyor provided for lifting out the solids is switched on only when there is a corresponding accumulation of solids and hence a build-up, after which a distinction is drawn between two operational phases, namely, on the one hand, a repeated running back of the conveyor counter to the direction of conveying, interrupted by stationary spells, with consequent recycling of the solids into the turbulence zone and hence opening up of the screen openings, and on the other hand a controlled discharge phase in which the conveyor lifts the accumulated solids out of the solid liquid mixture.

9. Apparatus for carrying out the process according to one of claims 1 to 8 for improving the processing of solids, sand rubbish or the like contained in a sewage, more particularly for reduced-toxin and reduced-moisture dumping and/or incineration or other disposal, with a channel or container which receives the solids in the form of a solid/liquid mixture, into which is placed a turbulator and from the solids obtained by washing the solid/liquid mixture and stripped of organic matter, on the one hand, and the moisture with the organic matter, on the other hand, are removed separately, **characterised** in that the turbulator is used in an area of the solid/liquid mixture immediately in front of the start of the conveying path of a worm conveyor for separating off the solids equipped with a drive and having a screening cover, which drive can be switched into reverse in its direction of rotation, at specific intervals, for the revolution of the worm conveyor several times counter to the conveying direction.

10. Apparatus according to claim 9, **characterised** in that the turbulator (5) has a high-speed motor-driven (7) vortex wheel (6) mounted immediately in front of the start of the conveying path.

11. Apparatus according to claim 10, **characterised** in that the vortex wheel (6) is provided immediately in front of the start of the conveying path of a worm conveyor (2) for lifting the solids out of a channel (20).

12. Apparatus according to claim 10, **characterised** in that the vortex wheel (6) is mounted in a container (1; 16) in which the solid liquid mixture is held, either as a result of introducing a solid separated from the sewage by a raking device or a worm conveyor (2) or by introducing a sand or rubbish filling mixed with washing water.

13. Apparatus according to claim 9, **characterised** in that the container (1) has an upwardly opening and/or lateral inlet port (8) for the solid matter - optionally containing some liquid - and an inlet port (11) for washing liquid, a screened worm (2, 4) for the washed solids, an outlet port (12) for the washing water contaminated with the organic matter which has been washed out, and a turbulator (5) which is mounted in an area (19) immediately in front of the start of the conveying path.

14. Apparatus according to claim 12 or 13, **characterised** in that the container (1) is of angular construction and has, opposite a discharge chute (13) for the material put in, especially solid material delivered by a raking device, a screening worm device (2, 4) mounted in the side edge area, the vortex wheel (6) being arranged in the vicinity of said worm device immediately in front of the conveying path.

15. Apparatus according to one of the claims 9 to 14, **characterised** in that the turbulator (5) is fluid-tight in construction, being a submersible device, with respect to its housing the drive motor assembly (7).

## Revendications

1. Procédé pour l'amélioration du traitement de matières solides, de sable, de déchets etc. contenus dans des eaux d'égout, en particulier pour le dépôt et/ou l'incinération ou une évacuation analogue pauvre en substances nocives et en humidité, les matières solides étant soumises, dans un mélange matière solide-liquide, à un tourbillonnement localisé et approprié et étant libérées de matières organiques qui par suite sont évacuées - en particulier amenées à une installation de clarification des eaux d'égout - avec la phase liquide, tandis que les matières solides si traitées sont triées de la mélange matière solide-liquide à des proportions plus ou moins grandes et sont amenées au dépôt, à l'incinération ou à un traitement ultérieur analogue pauvre en humiditè, **caractérisé** en ce que le tourbillonnement localisé et approprié a lieu immédiatement avant le début du triage de la matière solide hors de la zone de tourbillonnement et en ce que la matière solide triée est ramenée à la zone de tourbillonnement par renversement de la direction de triage.

2. Procédé selon la revendication 1, **caractérisé** en ce que l'amenée de la matière solide à laver vers la zone de tourbillonnement est effectuée en charges (discontinu).

3. Procédé selon la revendication 1 ou 2, **caractérisé** en ce que le tourbillonnement et ainsi le lavage des matières solides est effectué avant leur triage d'eaux usées polluées d'une manière correspondante à l'intérieur d'un sluice.

4. Procédé selon la revendication 1 ou 2, **caractérisé** en ce que le tourbillonnement et ainsi le lavage des matières solides est effectué à l'intérieur d'un récipient.

5. Procédé selon la revendication 4, **caractérisé** en ce qu'avant son tourbillonnement et ainsi son lavage la matière solide, après son triage d'un eau usée polluée d'une manière correspondante ou d'une matière solide qui est produit hors d'une eau usée, comme des déchets par exemple, est alimentée en liquide de lavage, soit en eau usée préclarifiée soit en eau industrielle.

6. Procédé selon l'une quelconque des revendications 1 à 5, **caractérisé** en que la zone de tourbillonnement est en plus alimentée en gaz ou en mélange gaz-liquide.

7. Procédé selon l'une quelconque des revendications 1 à 5, **caractérisé** en ce que le triage des matières solides est effectué par leur soulèvement hors de la mélange matière solide-liquide.

8. Procédé selon la revendication 7, **caractérisé** en ce qu'un moyen de transport pourvu pour le soulèvement est mis en marche seulement à une production correspondante de matière solide et ainsi à une obstruction, selon quoi on distingue entre deux phases d'opération, c'est à dire entre une phase de recyclage répété du moyen de transport, interrompu par des périodes d'arrêt contre la direction de transport et ainsi une réalimentiation des matières solides vers la zone de tourbillonnement et ainsi une libération des orifices du crible d'une part, et une phase d'évacuation appropriée d'autre part, pendant laquelle le moyen de transport soulève la matière solide si accumulée hors de la mélange madère solide-liquide.

9. Installation pour la mise en oeuvre du procédé selon l'une quelconque des revendications 1 à 8 pour l'amélioration du traitement de madères solides, de sable, de déchets etc. contenus dans des eaux d'égout, en particulier pour le dépôt et/ou l'incinération ou une évacuation analogue pauvre en substances nocives et humidité, comprenant un sluice ou récipient recevant la madère solide en forme d'une mélange matière solide-liquide à l'intérieur duquel est placé l'appareil de tourbillonnement et hors duquel est évacuée de manière trié la matière solide obtenue par son lavage dans la mélange madère solide-liquide et privée de madères organiques d'une part, et l'humidité avec les madères organiques d'autre part, **caractérisé** en ce que l'appareil de tourbillonnement est inséré dans une zone d'une mélange madère solide-liquide immédiatement devant le début de la distance de transport d'une hélice transporteuse pourvue d'un moyen d'entraînement et d'un manchon perforé pour le triage de la madère solide, ledit moyen d'entraînement étant agencé à être réversible en rotation en certains intervalles pour la révolution de l'hélice plusieurs fois contre la direction de transport.

10. Installation selon la revendication 9, **caractérisé** en ce que l'appareil de tourbillonnement (5) a une roue tourbillonnaire entraînée par moteur à une grande vitesse, ladite roue tourbillonnaire étant pourvue directement devant le début de la distance de transport.

11. Installation selon la revendication 10, **caratérisé** en ce que la roue de tourbillonnaire (6) est pourvue directement devant le début de la distance de transport d'une hélice transporteuse (2) pour le soulèvement de la matière solide hors d'un sluice (20).

12. Installation selon la revendication 10, **caractérisé** en ce que la roue tourbillonnaire (6) est arrangée dans un récipient (1; 16) dans lequel est contenuue la mélange matière solide-liquide soit par alimentation d'une matière solide triée d'une eau d'égout au moyen d'une installation de grille de retenue ou d'une hélice transporteuse soit par alimentation d'une charge de sable ou de déchets imprégnés de l'eau de lavage.

13. Installation selon la revendication 9, **caractérisé** en ce que le récipient (1) a une orifice ouverte vers le haut et/ou une orifice latérale pour l'introduction de la matière solide - le cas échéant avec une proportion liquide - et une orifice (11) d'introduction d'un liquide de lavage, un moyen d'évacuation (2, 3, 4, 10), en particulier une hélice perforée (2, 4) pou la matière solide lavée, une orifice d'évacuation (12) pour l'eau de lavage chargée des matières organiques nettoyées en avant et un appareil de tourbillonnement (5) qui est arrangé dans une zone (19) directement devant le début de la distance de transport.

14. Installation selon la revendication 12 ou 13, **caractérisé** en ce que le récipient (1) est agencé en forme angulaire et, vis à vis d'un couloir de jetée (13) pour la matière chargée, en particulier pour la matière solide livrée au moyen d'un grille de retenue, est pourvu d'une installation d'hélice transporteuse (2, 4) arrangée dans une zone périphérique latérale, la roue tourbillonnaire étant arrangée dans la zone de l'hélice transporteuse directement devant le début de la distance de transport.

15. Installation selon l'une quelconque des revendications 9 à 14, **caractérisé** en ce que l'appareil de tourbillonnement (5) en vue de sa boite pour l'unité d'entraînement par moteur (7) est agencé comme d'appareil à immersion étanche au liquide.
